# EUROPEAN PATENT APPLICATION

(11) **EP 2 930 204 A1**
(43) Date of publication of application: **14.10.2015**
(21) Application number: 13859633.3
(22) Date of filing: 06.12.2013
(51) Int. Cl.: C08K 3/04, C08L 21/00, C08L 7/00, C08K 3/36

(54) **RUBBER COMPOSITE COMPOSITION FOR HIGHLY THERMALLY CONDUCTIVE BLADDER COMPRISING CARBON NANOTUBES AND PRODUCTION METHOD FOR SAME**

(30) Priority: 07.12.2012 KR 20120141835
(71) Applicant: Hanwha Chemical Corporation, Jung-gu, Seoul 100-760 (KR)
(72) Inventor: HONG, Seung Ho, Incheon 403-859 (KR); KIM, Kyung YI, Daegu 702-823 (KR); JEONG, Kwang Seok, Yongin-si Gyeonggi-do 446-724 (KR); CHOI, Young Chul, Yongin-si Gyeonggi-do 446-959 (KR)
(74) Representative: Beckmann, Claus
(86) International application number: PCT/KR2013/011285
(87) International publication number: WO 2014/088365

(57) **Abstract**

The present invention relates to a rubber composite composition comprising aligned carbon nanotube bundles and to a production method for same. As compared with existing rubber composites comprising carbon nanotubes, the rubber composite according to the present invention has outstanding carbon nanotube dispersion properties, with uniform formation of same inside a butyl rubber matrix, and thus the invention has enhanced thermal conductivity and provides improved mechanical properties such as tensile strength and durability in spite of the enhanced thermal conductivity.

## Description

### [Technical Field]

The present invention relates to a rubber composite composition including carbon nanotubes, and a method of preparing the same, and more particularly, to a rubber composite of high efficiency having improved thermal conductivity, tensile strength and durability by including aligned carbon nanotube bundles, and a method of preparing the same.

### [Background Art]

A carbon nanotube (CNT) is a cylindrical tube shaped-material, having a sp2 electron configuration, that is, having a structure where one carbon atom is bonded to three other neighboring carbon atoms so as to be curled in a hexagonal honeycomb pattern. Since the tube has a diameter of only several to several tens of nanometers, it was also called a carbon nanotube. The carbon nanotube has similar electrical conductivity to copper, identical thermal conductivity to diamond having the best thermal conductivity in nature, and 100 times higher strength than steel. Carbon fiber breaks only at 1% strain, whereas the carbon nanotube may withstand breakage even at 15% strain.

Since the discovery of this material, scientists have devoted themselves to synthesis and applications thereof, and thus, a number of devices using the carbon nanotubes such as semiconductors and flat panel displays, batteries, super-strong fiber, bio-sensors, and television picture tube have been developed.

Further, for safe driving of vehicles and cost savings of tires, a tire tread should have excellent wear resistance and easily release heat generated from a wear process.

In this regard, Korean Patent Application No. 2005-0056685 (Patent Document 1) discloses a synthesis method of a rubber composition for a tire tread for trucks/buses, containing syndiotactic polybutadiene in a cis-polybutadiene matrix, thereby reducing a used amount of carbon black to reduce heat generation, and being capable of hydrocarbon bonding in addition to sulfide bonding upon rubber crosslinking, thereby improving a low fuel consumption property and a wear property.

Further, Korean Patent Application No. 2005-0092532 (Patent Document 2) discloses a rubber composition for a tire having improved tensile strength, containing nanoclay as a reinforcing agent, wherein it includes an oligomer binder having a reactive group reacting with a hydroxyl group of the clay, and simultaneously a functional group of a saturated or unsaturated chain capable of reacting with rubber.

Further, Korean Patent Application No. 2005-0050487 (Patent Document 3) discloses a tire tread rubber composition having an improved wear property, wherein 1-3 phr of sodium dioctyl sulfosuccinate is used for improving dispersibility of a carbon nanotube.

Though it has been reported that in case of adding a carbon nanotube as a reinforcing agent, tensile strength, an elastic modulus, durability and the like are greatly improved, the carbon nanotube has a problem in that due to a shape characteristic, scattering is generated by low density and specific surface area, and agglomeration is generated by Van der Waals forces, thereby deteriorating dispersibility when combined with rubber. In order to improve this, a method of adding a surfactant, a silane coupling agent, and the like is known in the art, but had a problem in that physical properties such as thermal conductivity and electrical conductivity are significantly reduced.

### [Patent Document]

(Patent Document 1) Korean Patent Application No. 2005-0056685
(Patent Document 2) Korean Patent Application No. 2005-0092532
(Patent Document 3) Korean Patent Application No. 2005-0050487

### [Non-patent Document]

(Non-patent Document 1) S. Chakarabarti, T. Nagasaka, Y. Yoshikawa, L. Pan, Y. Nakayama, 2006, Growth of super long aligned brush-like carbon nanotubes, Japanese Journal of Applied Physics, 45(28) L720-L722

### [Disclosure]

### [Technical Problem]

An object of the present invention is to provide a rubber composite having excellent dispersibility of a carbon nanotube, and simultaneously improved thermal conductivity, tensile strength and durability, and a method of preparing the same.

### [Technical Solution]

In one general aspect, a rubber composite composition includes aligned carbon nanotube bundles.

The aligned carbon nanotube bundle may have a diameter of 0.5 to 100 µm, and a length of 1 to 1000 µm.

Further, the aligned carbon nanotube bundle may be a carbon nanotube bundle formed by carbon nanotube strands having a diameter of 1 to 100 nm and a length of 0.5 to 2500 µm being aligned in one direction.

According to an exemplary embodiment of the present invention, the rubber composite composition may include aligned carbon nanotube bundles, raw rubber and a filler.

According to an exemplary embodiment of the present invention, aligned carbon nanotube bundles may be included in 0.5-10 wt%, raw rubber may be included in 45-55 wt%, and a filler may be included in 35-50 wt%.

The raw rubber may be natural rubber, synthetic rubber or a combination thereof.

The filler may be carbon black, silica or a combination thereof.

In another general aspect, a rubber composite for a bladder includes the rubber composite composition according to the present invention.

In still another general aspect, a method of preparing a rubber composite includes mixing a rubber composite composition including 0.5-10 wt% of aligned carbon nanotube bundles, 45-55 wt% of raw rubber, and 35-50 wt% of a filler; and dispersing the mixed composition.

Herein, the aligned carbon nanotube bundle may be synthesized by chemical vapor deposition using hydrocarbon gas and hydrogen gas in the presence of catalyst metal particles prepared by reducing a transition metal precursor.

Hereinafter, the present invention will be described in detail.

Carbon nanotubes are characterized by being a bundle form of carbon nanotubes aligned in one direction, which may be also referred to as "an aligned carbon nanotube bundle" in the present invention.

The present inventors researched in order to overcome the limitations on dispersibility and directivity of carbon nanotubes in case of a rubber composite using the existing carbon nanotubes, and as a result, have discovered that by using carbon nanotube bundles aligned in one direction, the problems of dispersibility and directivity of the existing carbon nanotubes may be overcome, and thermal conductivity and durability may be increased, thereby completing the present invention.

The present invention provides a rubber composite composition including aligned carbon nanotube bundles.

The aligned carbon nanotube bundle according to an exemplary embodiment of the present invention may have a diameter of 0.5 to 100 µm, preferably 1 to 50 µm, and a length of 1 to 1000 µm.

Each carbon nanotube strand forming the aligned carbon nanotube bundle according to an exemplary embodiment of the present invention may have a diameter of 1 to 100 nm, preferably 1 to 30 nm, and a length of 0.5 to 2500 µm, preferably 1 to 500 µm. It is more preferred for thermal conductivity, tensile strength and durability that the carbon nanotube bundle may have a diameter of 1 to 20 µm and a length of 10 to 300 µm, when carbon nanotube strands are aligned in one direction to form a bundle.

Herein, if the carbon nanotube bundle has a length less than 1 µm, the effects of the aligned carbon nanotube bundle according to the present invention may not be obtained, and if it has a length more than 1000 µm, a length deviation of each carbon nanotube strand included in the aligned carbon nanotube bundles cut by a device in the preparation of the rubber composite may be increased to make the surface of the rubber composite uneven.

The present invention provides a rubber composite composition including aligned carbon nanotube bundles as such, and specifically, the composition may include aligned carbon nanotube bundles, raw rubber and a filler.

The aligned carbon nanotube bundles according to the present invention may be included in 0.5 to 10 wt%, more preferably 0.5 to 2 wt%, based on the total rubber composite composition, but not significantly limited thereto. However, if the aligned carbon nanotube bundles are included within the above range of content, the rubber composite may have excellent thermal conductivity, and also excellent mechanical properties such as tensile strength and modulus. Specifically, if the aligned carbon nanotube bundles are included less than 0.5 wt%, the effect of the thermal conductivity property of the present invention may be insignificant, and if it is excessively included more than 2 wt%, modulus and hardness may be very high and a tensile property may be poor, thereby deteriorating rubber properties. Thus, an appropriate combination is needed.

In the present invention, the raw rubber may be included in 45 to 55 wt%, more preferably 50 to 55 wt%, based on the total rubber composite composition, and within such range of the content of the raw rubber, the rubber composite is kneaded well, and hardness is not increased, which are preferred.

Further, the filler may be included in 35 to 50 wt%, more preferably 40 to 45 wt%, based on the total rubber composite composition. If the rubber composite composition includes less than 35 wt% of the filler, the rubber composite may not be kneaded well, and a reinforcing effect by the filler may be insignificant, and if the rubber composite composition includes more than 50 wt% of the filler, crack resistance performance may be degraded, and hardness may be increased, thereby lowering workability.

The raw rubber may be natural rubber, synthetic rubber or a combination thereof, and the natural rubber may be general natural rubber or modified natural rubber.

The general natural rubber may be any one if it is known as natural rubber, and its country of origin and the like are not limited. The natural rubber includes cis-1,4-polyisoprene as a main body, but depending on the required properties, may include trans-1,4-polyisoprene. Therefore, the natural rubber may include natural rubber including cis-1,4-polyisoprene as a main body, or natural rubber including trans-1,4-isoprene as a main body, for example, balata, a kind of rubber of Sapotaceae family from South America, and the like.

The modified natural rubber refers to the general natural rubber which is modified or purified. For example, the modified natural rubber may include epoxidized natural rubber (ENR), deproteinized natural rubber (DPNR), hydrogenated natural rubber, and the like.

In the above, the synthetic rubber may be styrene butadiene rubber (SBR), modified styrene butadiene rubber, butadiene rubber (BR), modified butadiene rubber, chlorosulfonated polyethylene rubber, epichlorohydrin rubber, fluorine rubber, silicone rubber, nitrile rubber, hydrogenated nitrile rubber, nitrile butadiene rubber (NBR), modified nitrile butadiene rubber, chlorinated polyethylene rubber, styrene ethylene butylene styrene (SEBS) rubber, ethylene propylene rubber, ethylene propylene diene (EPDM) rubber, Hypalon rubber, chloroprene rubber, ethylene vinylacetate rubber, acrylic rubber, hydrin rubber, vinyl benzyl chloride styrene butadiene rubber, bromomethyl styrene butyl rubber, maleic acid styrene butadiene rubber, carboxylic acid styrene butadiene rubber, epoxy isoprene rubber, maleic acid ethylene propylene rubber, carboxylic acid nitrile butadiene rubber, brominated polyisobutyl isoprene-co-paramethylstyrene (BIMS), or a combination thereof.

The synthetic rubber may be preferably butadiene rubber. If the butadiene rubber is used as the synthetic rubber, the present invention has an advantageous effect of improved rebound resilience and wear resistance.

The filler may be carbon black, silica or a combination thereof.

The carbon black may have DBP (n-dibutyl phthalate) oil absorption of 60 to 180 cc/100g, a tint value of 50 to 120%, iodine adsorption of 30 to 100 mg/g. Preferably, the carbon black may have DBP (n-dibutyl phthalate) oil absorption of 80 to 100 cc/100g, a tint value of 50 to 100%, and iodine adsorption of 30 to 50 mg/g. If the carbon black having the DBP (n-dibutyl phthalate) oil absorption, the tint value, and the iodine adsorption within the above range is used, rubber having appropriate hardness, modulus, and durability may be prepared.

The carbon black preferably used in the present invention may have iodine adsorption of 80 mg/g or less, preferably 15 to 40 mg/g, an average particle diameter of 250 nm or less, preferably 40 to 100 nm, and also DBP (n-dibutyl phthalate) oil absorption of 10 to 300 cm³/100g, preferably 40 to 150 cm³/100g. As such carbon black, commercially available carbon black such as FEF grade, GPF grade and SRF grade carbon black may be used.

Herein, the iodine adsorption and DBP oil absorption are representative indicators representing the properties of carbon black, and measured according to JIS K6217. The iodine adsorption is an indicator of the total surface area including the pores of carbon black. Further, the DBP oil absorption has a relation with a structure, and the iodine adsorption and the DBP oil absorption have a great influence on reinforcement, an extrusion property, dispersibility, coloring strength, viscosity or conductivity when combined with the rubber composition, depending on whether each of these characteristic values is high or low.

The particle diameter represents an average diameter measured by and calculated from an electron microscopic image of small spherical components forming carbon black agglomerate, and is closely related to reinforcement or blackness when combined with the rubber composition.

Because of this, in case of using carbon black having any one of iodine adsorption, an average particle diameter and DBP oil absorption out of the above conditions, sufficient reinforcement may not be obtained, or reinforcement is obtained but the dough viscosity of the rubber composition may be increased, thereby deteriorating moldability by LIM molding.

As the silica, silica having nitrogen adsorption specific surface area (nitrogen surface area per gram, N2SA) of 100 to 180 m²/g, and CTAB (cetyl trimethyl ammonium bromide) adsorption specific surface area of 110 to 170 m²/g may be used, but the present invention is not limited thereto.

If the silica having the nitrogen adsorption specific surface area and the CTAB adsorption specific surface area within the above range is used, rubber having advantageous durability together with an appropriate reinforcement effect may be prepared.

The present invention provides a rubber composite for a bladder including the rubber composite composition.

The method of preparing the rubber composite may include mixing the rubber composite composition including the aligned carbon nanotube bundles, raw rubber and a filler, according to an exemplary embodiment of the present invention; and dispersing the mixed composition.

The rubber composite may be prepared in a conventional manner, and according to an exemplary embodiment of the present invention, it may be prepared by including adding the composition to a mixer such as a kneader and a Banbury mixer, and then mixing the composition under a heat environment at 50-200 °C; and dispersing the mixed mixture by a two-roll mill.

Herein, additionally, the aligned carbon nanotube bundle may be synthesized by chemical vapor deposition using hydrocarbon gas and hydrogen gas in the presence of catalyst metal particles prepared by reducing a transition metal precursor. Herein, the hydrocarbon gas may be preferably ethylene gas.

When synthesizing the carbon nanotubes, it is important to grow the carbon nanotubes in a bundle shape, and the aligned carbon nanotube bundle according to the present invention has high thermal conductivity when prepared to be aligned in a longitudinal direction. The specific preparation method therefor may be carried out with reference to Non-patent Document 1, but not necessarily limited thereto.

Meanwhile, the rubber composite composition according to the present invention may include a vulcanizing agent, a vulcanizing auxiliary agent, a vulcanizing accelerator, a softening agent, an anti-aging agent, or the like as other additives, in addition to the above components.

As the vulcanizing agent used in the present invention, sulfur, a sulfur compound or organic peroxide may be used; the sulfur includes sulfur powder and the like, and the sulfur compound includes sulfur chloride, sulfur dichloride, high molecular weight polysulfide, and a sulfur compound capable of vulcanizing by releasing active sulfur at vulcanizing temperature, such as, morpholine disulfide, alkylphenyl disulfide, tetramethylthiuram disulfide and dipentamethylenethiuram tetrasulfide. According to an exemplary embodiment of the present invention, sulfur as the vulcanizing agent may be generally used in 0.1 to 3.0 parts by weight based on 100 parts by weight of the rubber composite, but not limited thereto.

According to an exemplary embodiment of the present invention, the vulcanizing auxiliary agent may be one or more selected from the group consisting of stearic acid and zinc oxide, and the zinc oxide may be generally used in 1.5-10 parts by weight, based on 100 parts by weight of the rubber composite, but not limited thereto.

Further, in the present invention, a vulcanizing accelerator, for example, a thiazole compound such as N-cyclohexyl-2-benzothizole sulphenamide, N-oxydiethylene-2-benzothiazole sulphenamide and dibenzothiazyl disulfide, a guanidine compound such as diphenylguanidine, triphenylguanidine and diphenylguanidine phthalate, an aldehyde amine compound such as an acetaldehyde-aniline condensate and acetaldehyde ammonia, an immidazolyl compound such as an aldehyde ammonia compound and 2-mercaptoimmidazoline, a phenolic resin, and the like may be used, but not significantly limited thereto, if it is a vulcanizing accelerator used in the art.

Further, a softening agent component may be used, and the softening agent component may be one or more selected from the group consisting of process oil, silicone-based oil, fatty acid amide, lubricating oil, paraffin, liquid paraffin, petroleum asphalt, vaseline, coal tar, castor oil, linseed oil, factice, beeswax, palmitic acid, stearic acid, barium stearate, calcium stearate, zinc laurate, atactic polypropylene and coumarone-indene resins. Among these, the process oil is most preferred.

Further, for anti-aging and stability improvement of a bladder, an anti-aging agent may further included. The anti-aging agent may be N-(1,3-dimethylbutyl)-N-phenyl-phenylenediamine, poly(2,2,4-trimethyl-1,2-dihydroquinoline), wax or a combination thereof, and included in 1 to 3 parts by weight, based on 100 parts by weight of raw rubber.

The rubber composite for a bladder including the rubber composite composition according to the present invention is thus included in the range of the present invention.

As such, the rubber composite composition prepared according to the present invention may solve an agglomeration problem appearing when using the existing carbon nanotubes as a reinforcing agent, thereby securing excellent thermal conductivity, mechanical properties and elasticity, and accordingly, may be applied to various fields. In particular, the rubber composite composition may secure excellent physical properties for a bladder of a tire. Besides, the rubber composite composition may be used as rubber materials used in various fields such as electric and electronic components, a transportation, civil engineering and building materials, applications in medical or leisure, and the like.

### [Advantageous Effects]

The rubber composite prepared by including aligned carbon nanotube bundles according to the present invention has elevated thermal conductivity as compared with the rubber composite including the existing carbon nanotubes, since carbon nanotubes which are a high thermal transfer material are uniformly distributed in a rubber matrix, and though it has increased thermal conductivity, it may have an effect of excellent mechanical properties such as tensile strength and durability being equal to or higher than those of the existing rubber composite.

Further, in the preparation of the rubber composite, elasticity, a property of rubber may be improved by including the aligned carbon nanotube bundles.

### [Description of Drawings]

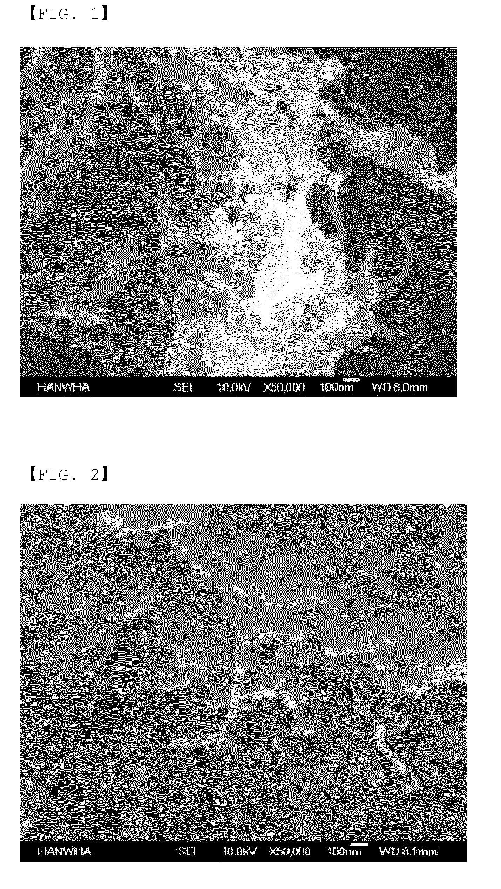

The above and other objects, features and advantages of the present invention will become apparent from the following description of preferred embodiments given in conjunction with the accompanying drawings, in which: FIG. 1 is a photograph observing an enlarged section of a rubber composite specimen using common carbon nanotubes, not aligned carbon nanotube bundles.

FIG. 2 is a photograph observing an enlarged section of a rubber composite specimen using aligned carbon nanotubes according to an exemplary embodiment of the present invention.

### [Best Mode]

Hereinafter, a detailed description of the present invention will be provided by way of example, however, the present invention is not limited to the following Example.

### [Example 1]

### Preparation of aligned carbon nanotube bundles

12 g of iron(III) nitrate nonahydrate, 8.4 g of cobalt(II) nitrate hexahydrate, 36 g of aluminum nitrate nonahydrate, and 10 g of citric acid were added in this order to 100 ml of distilled water, and mixed.

The prepared solution was transferred to a stainless steel container, and then the container was placed in a sintering furnace heated to 550 °C, and subjected to a pyrolysis process for 20 minutes to obtain 20 g of black brown catalyst powder.

After 10g of the catalyst synthesized therefrom was applied evenly on a quartz boat, the boat was mounted in the inside of a quartz reaction tube of a thermal chemical vapor deposition apparatus. The temperature of the reaction tube was raised to 750 °C over 1 hour under nitrogen atmosphere, and then 2 L/minute of hydrogen was flowed therein for 20 minutes.

Thereafter, while 5L of ethylene and 5L of hydrogen per minute were flowed therein, a synthesis reaction of carbon nanotubes was carried out for 60 minutes. Through the process, 210 g of aligned carbon nanotube bundles were obtained.

### [Example 2]

### Preparation of rubber composite

11.3 g of aligned carbon nanotube bundles prepared in above Example 1, having a diameter of the bundle of 4 µm, an average length of the bundle of 35 µm, 358.8 g of butyl rubber (Butyl 268, Exxon), 289.01 g of carbon black (N220, Orion), 44.85 g of process oil, and 3.59 g of stearic acid were mixed with a kneader equipment at 100 °C and 30 rpm for 18 minutes, and then dispersed 7 times by two-roll mill means and aged for 12 hours.

Then, the mixture was mixed with 16.73 g of zinc oxide, and 30.11 g of a phenolic resin (sp-1045, Schenectady chemical) again in a kneader at 70 °C for 7 minutes and 30 seconds, and then dispersed 7 times by the two-roll mill means, and after 12 hours, vulcanized at 193 °C and 100 kgf/cm² for 30 minutes.

### [Comparative Example 1]

### Preparation of rubber composite

The process was carried out in the same manner as in Example 2, except that multi-walled carbon nanotubes (Hanwha Chemical Co., Ltd., product name CM-95) having an average diameter of 12.5 nm and an average length of 15.0 µm were used instead of aligned carbon nanotube bundles.

### [Comparative Example 2]

### Preparation of rubber composite

The process was carried out in the same manner as in Example 2, except that aligned carbon nanotube bundles are not added.

### [Comparative Example 3]

### Preparation of rubber composite

The process was carried out in the same manner as in Example 2, except that 408.8 g of butyl rubber (Butyl 268, Exxon) and 239.01 g of carbon black (N220, Orion) were used.

Physical properties such as tensile strength, elongation, 300% modulus, shore hardness and thermal conductivity of the rubber composite of above Example 2 and Comparative Examples 1-3 were measured according to related ASTM regulations, and the results are shown in the following Table 1:

**[Table 1]**

| Entry | Example 2 | Comparative Example 1 | Comparative Example 2 | Comparative Example 3 |
|---|---|---|---|---|
| Tensile strength (kgf/cm²) | 148 | 123 | 121 | 146 |
| Elongation (%) | 670 | 604 | 605 | 694 |
| Modulus (kgf/cm²) | 70 | 66 | 60 | 58 |
| Shore hardness | 71 | 70 | 66 | 62 |
| Thermal conductivity (W/mK) | 0.348 | 0.286 | 0.252 | 0.224 |

As shown in the measurement results of physical properties in above Table 1, it was confirmed that the rubber composite of Example 2 of the present invention to which aligned carbon nanotube bundles having a diameter of 4 µm and an average length of the bundle of 35 µm were applied had carbon nanotubes uniformly dispersed in butyl rubber, as compared with the rubber composite of Comparative Example 1 using common carbon nanotubes, not aligned carbon nanotube bundles, and the rubber composite of Comparative Example 2 without using carbon nanotubes at all, and thus, had excellent thermal conductivity, and also excellent mechanical properties. The rubber composite of Comparative Example 3 using the same aligned carbon nanotube, and having a relatively large absolute amount of raw rubber had relatively high elongation which is a rubber property, but low thermal conductivity, and thus, it is difficult to be used as a bladder.

Further, the rubber composites of above Example 2 and Comparative Examples 1-3 were observed with an electron microscope.

As a result of observation, in Fig. 1 showing the rubber composite of Comparative Example 1 using common carbon nanotubes, not aligned carbon nanotube bundles, an agglomerate of carbon nanotubes is observed as it is, whereas in FIG. 2 showing the rubber composite of Example 2 using aligned carbon nanotubes, it is confirmed that carbon nanotubes are evenly uniformly dispersed in a rubber matrix.

## Claims

1. A rubber composite composition comprising aligned carbon nanotube bundles.

2. The rubber composite composition of claim 1, wherein the aligned carbon nanotube bundle has a diameter of 0.5 to 100 µm, and a length of 1 to 1000 µm.

3. The rubber composite composition of claim 1, wherein the aligned carbon nanotube bundle is a carbon nanotube bundle formed by carbon nanotube strands having a diameter of 1 to 100 nm and a length of 0.5 to 2500 µm being aligned in one direction.

4. The rubber composite composition of claim 1, wherein it comprises aligned carbon nanotube bundles, raw rubber, and a filler.

5. The rubber composite composition of claim 4, wherein the aligned carbon nanotube bundles are comprised in 0.5-10 wt%, the raw rubber is comprised in 45-55 wt%, and the filler is comprised in 35-50 wt%, based on the total composition.

6. The rubber composite composition of claim 4, wherein the raw rubber is natural rubber, synthetic rubber or a combination thereof.

7. The rubber composite composition of claim 4, wherein the filler is carbon black, silica or a combination thereof.

8. A rubber composite for a bladder comprising the rubber composite composition of any one of claims 1 to 7.

9. A method of preparing a rubber composite comprising: mixing a rubber composite composition including 0.5-10 wt% of aligned carbon nanotube bundles, 45-55 wt% of raw rubber, and 35-50 wt% of a filler; and dispersing the mixed composition.

10. The method of claim 9, wherein the aligned carbon nanotube bundle is synthesized by chemical vapor deposition using hydrocarbon gas and hydrogen gas in the presence of catalyst metal particles prepared by reducing a transition metal precursor.
